# EUROPEAN PATENT SPECIFICATION

(11) **EP 0 866 284 B1**
(45) Date of publication and mention of the grant of the patent: **23.11.2005**
(21) Application number: 98104720.2
(22) Date of filing: 16.03.1998
(51) Int. Cl.: F24F 11/00, F25B 49/02, F04B 35/04, H02M 5/458

(54) **Air conditioning system and power converter apparatus for the same**
Klimaanlage und Stromrichterschaltungsanordnung dafür
Système de climatisation d'air et convertisseur de puissance pour celui-ci

(30) Priority: 19.03.1997 JP 6608497
(43) Date of publication of application: 23.09.1998
(73) Proprietor: Hitachi, Ltd., Chiyoda-ku, Tokyo (JP)
(72) Inventor: Ito, Makoto, Shimizu-shi (JP); Yoshikawa, Tomio, Shimizu-shi (JP); Nagura, Hirokazu, Hitachi-shi (JP); Kubo, Kenji, Hitachi-shi (JP); Ando, Tatsuo, Shimizu-shi (JP)
(74) Representative: Finck, Dieter

(56) References cited:
- EP-A- 0 697 569
- US-A- 5 179 842
- PATENT ABSTRACTS OF JAPAN vol. 017, no. 393 (E-1402), 22 July 1993 (1993-07-22) -& JP 05 068376 A (FUJITSU GENERAL LTD), 19 March 1993 (1993-03-19)
- ISMAIL E H ET AL: "A new class of low cost three-phase high quality rectifiers with zero-voltage switching" PROCEEDINGS OF THE ANNUAL APPLIED POWER ELECTRONICS CONFERENCE AND EXPOSITION (APEC). SAN DIEGO, MAR. 7 - 11, 1993, NEW YORK, IEEE, US, vol. CONF. 8, 7 March 1993 (1993-03-07), pages 182-189, XP010111225 ISBN: 0-7803-0983-9
- ISMAIL E ET AL: "A single transistor three phase resonant switch for high quality rectification" PROCEEDINGS OF THE ANNUAL POWER ELECTRONICS SPECIALISTS CONFERENCE (PESC). TOLEDO, JUNE 29 - JULY 3, 1992, NEW YORK, IEEE, US, vol. 2 CONF. 23, 29 June 1992 (1992-06-29), pages 1341-1351, XP010064725 ISBN: 0-7803-0695-3

## Description

### BACKGROUND OF THE INVENTION

The present invention generally relates to an air conditioning system in which an inverter control is employed. More particularly, the present invention is concerned with an air conditioning system comprising the features of the preamble of claim 1. Such a system is known from JP-A- 5-68 376. Further, the present invention is further concerned with a power conversion apparatus as defined in the preamble of claims 5. Such an apparatus is disclosed in the article "A new class of low cost three-phase high quality rectifiers with zero-voltage switching" by E.H. Ismail and R.W. Erickson.

In conjunction with the conventional air conditioning system in which an inverter circuit is employed in a power supply circuit, such arrangement is known in which a switching element is provided in association with an AC-DC converter (or rectifier circuit), wherein an input current which has essentially a sinusoidal waveform and which is substantially in phase with the input voltage is detected in order to control the start and the stop of control operation for the switching element on the basis of the input current, as is disclosed, for instance, in JP-A-5-68376 (Japanese Unexamined Patent Application Publication No. 68376/1993).

With the arrangement of the conventional power circuit for the air conditioning system mentioned above, abnormal rise of the output voltage in a light-load operation state of the air conditioning system can be suppressed with the DC voltage supplied to the inverter circuit being stabilized. However, in the air conditioning system destined for the applications in which the load imposed on the air conditioning system changes remarkably, as in the case of a multi-room air conditioning system which is designed for air-conditioning selectively a plurality of rooms with respective indoor heat exchangers in cooperation with a single outdoor heat exchanger, there exists a demand for improving the air conditioning system by enhancing cooling/heating capability thereof while realizing finer control.

### SUMMARY OF THE INVENTION

In the light of the state of the art described above, it is an object of the present invention to provide an air conditioning system which can be implemented in a relatively simple structure at low manufacturing costs while ensuring enhanced capability of suppressing generation of higher harmonics.

In view of the above object which will become apparent as the description proceeds, there is provided an air conditioning system a according to the features of claim 1.

In the air conditioning system of the structure described in claim 1, when the load current increases relative to the output of the inverter circuit, a corresponding change in the DC voltage generated by rectification of the AC power is detected, whereon the switching element is controlled through the pulse-width modulation (PWM) control in dependence on the detected voltage change. Thus, the DC voltage supplied to the inverter circuit can be maintained to be steadily constant. In this way, a load-dependent stable control can be realized for the air conditioning system notwithstanding of remarkable change of the load, making thus it possible to suppress effectively the generation of higher harmonics even when the load should change steeply and remarkably.

A carrier frequency for the pulse-width modulation performed by the PWM control circuit may be changed in dependence on the value of the DC voltage detected by the DC voltage detecting circuit.

Owing to the arrangement mentioned above, it becomes possible to control the current flowing through the AC reactor, which in turn means that finer control of the air conditioning system can be realized.

In yet another preferred mode for carrying out the invention, such arrangement may be adopted that the control operation for the switching element is suspended when a load current of the inverter module is smaller than a predetermined value.

In a further preferred mode for carrying out the invention, such arrangement may be made that the control operation for the switching element is externally suspended.

By virtue of the above arrangement, the time taken for the DC voltage to lower to a safety level after stoppage of operation of the air conditioning system can be shortened, whereby maintenance services for the air conditioning system can be facilitated. practically tolerable range notwithstanding of steep changes of the load.

According to a further aspect of the present invention, there is provided a power conversion apparatus for converting an AC power from an AC power source into a DC power comprising the features of claim 5.

The above and other objects and attendant advantages of the present invention will more easily be understood by reading the following description of the preferred embodiments thereof taken, only by way of example, in conjunction with the accompanying drawings.

### BRIEF DESCRIPTION OF THE DRAWINGS

In the course of the description which follows, reference is made to the drawings, in which:
Fig. 1 is a block diagram showing a power converter for an air conditioning system according to an embodiment of the present invention;
Fig. 2 is a block diagram for illustrating a refrigerating cycle of an air conditioning system equipped with a power converter shown in Fig. 1;
Fig. 3 is a block diagram showing a configuration of a power converter for the air conditioning system according to another embodiment of the invention;
Fig. 4 is a waveform diagram showing a waveform of a current flowing through an AC-reactor;
Fig. 5 is a flow chart for illustrating a higher harmonic suppression control according to yet another embodiment of the present invention; and
Fig. 6 is a characteristic diagram for illustrating a relation between changes of load current and duty ratio of a switching element in the air conditioning system.

### DESCRIPTION OF THE PREFERRED EMBODIMENTS

Now, the present invention will be described in detail in conjunction with what is presently considered as preferred or typical embodiments thereof by reference to the drawings. In the following description, like reference characters designate like or corresponding parts throughout the several views.

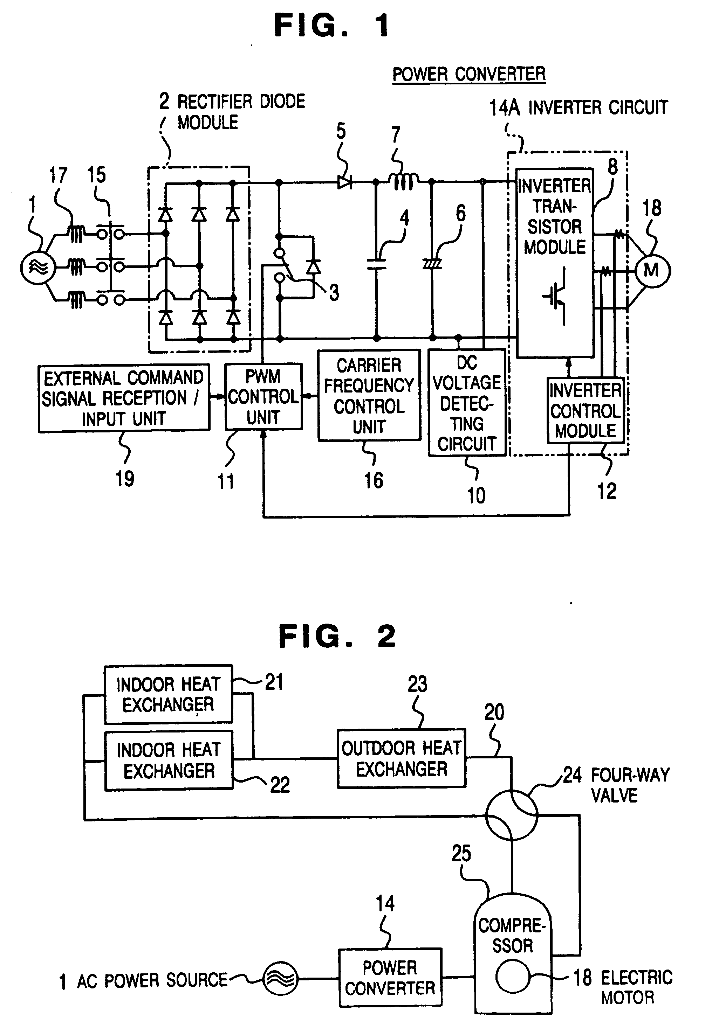

A first embodiment of the invention will be described by referring to Figs. 1 and 2, wherein Fig. 1 is a block diagram showing a power converter apparatus according to a first embodiment of the present invention and Fig. 2 is a block diagram for illustrating a refrigerating cycle system of an air conditioning system equipped with the power converter shown in Fig. 1.

First referring to Fig. 2, there is shown a refrigerating cycle loop 20 of an air conditioning system which is comprised of a plurality of indoor heat exchangers 21 and 22 and an outdoor heat exchanger 23, a four-way valve 24 and a compressor 25, wherein the indoor heat exchangers 21 and 22, the outdoor heat exchanger 23, the four-way valve 24 and the compressor 25 are so interconnected as to form a closed loop through which a coolant is forced to flow. In this conjunction, the four-way valve 24 serves to change over the flowing direction of the coolant in dependence on cooling or heating operation mode. The compressor 25 is equipped with an electric motor 18 incorporated therein for performing suction, compression and discharge of the coolant, being rotationally driven by the electric motor 18. For driving the electric motor 18, an electric power is supplied to the electric motor 18 from an AC power source 1 by way of a power converter which serves for generating a DC voltage from the AC power to thereby control the rotation number (rpm) of the electric motor 18 through a PWM control of the DC voltage. A circuit configuration of the power converter is shown in detail in Fig. 1.

Referring to Fig. 1, reference numeral 17 denotes collectively AC-reactors designed for boosting operation, numeral 15 denotes a switch for turning on/off (or interrupting) the power source, and numeral 2 denotes generally a rectifier diode module for rectifying a three-phase AC power to thereby generate a DC voltage. A switching element 3 serves for boosting the DC voltage Vdc by controlling the currents flowing through the AC-reactors 17, respectively. The switching element 3 is controlled through a PWM (pulse-width modulation) control by a PWM control circuit 11 (or alternatively a chopper control circuit).

On the other hand, the PWM control circuit 11 is controlled as a function of an input parameter indicative of the change of the DC voltage Vdc detected by a DC voltage detecting circuit 10.

A converter circuit is comprised of a resonance capacitor 4, the AC-reactors 17, a resonance reactor 7 for causing a current to flow in the direction for interrupting the current flowing through the AC-reactor 17, a reverse-blocking diode 5 for preventing reverse current from the resonance reactor 7 and a smoothing capacitor 6 for smoothing the DC voltage.

The output of the converter circuit is connected to an inverter circuit 14A which is comprised of an inverter transistor module 8 including transistor elements integrated as a module for generating a three-phase AC output and an inverter control module 12 for performing PWM control of the inverter transistor module 8, wherein the electric motor 18 is driven by the inverter circuit 14A under the control of the inverter control module 12.

The carrier frequency of the PWM control signal for controlling the switching element 3 (or switching frequency for controlling the duty ratio thereof) is selected to be higher than the resonance frequency of the resonance capacitor 4 and the resonance reactor 7 and not to exceed three times as high a frequency as the resonance frequency.

When the switching element 3 is turned on (or closed), the current flowing through the resonance reactor 7 increases steeply. When the switching element 3 is turned off, the current flowing through the AC-reactor 17 is commutated to the resonance capacitor 4.

Consequently, the voltage appearing across the resonance capacitor 4 increases while the current flowing through the AC-reactor 17 decreases. At this time point, a current also flows through the resonance reactor 7 in the opposite phase to the current flowing through the AC-reactor 17, decreasing the current flowing through the AC-reactor 17.

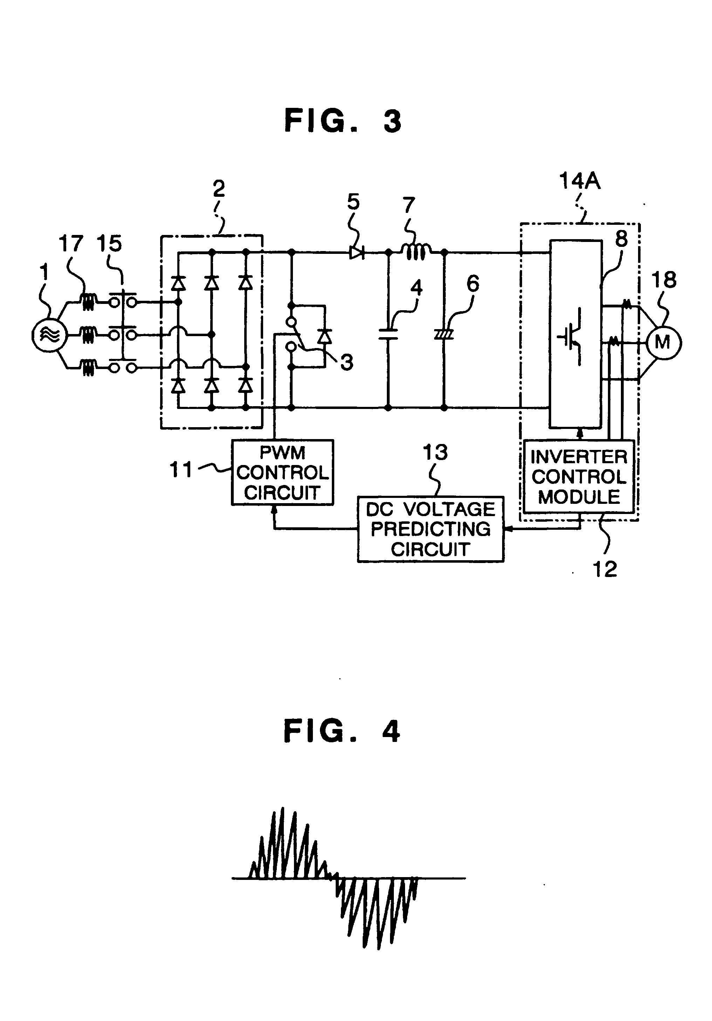

In this manner, the current flowing through the AC-reactor 17 can be interrupted without fail. To say in another way, the current flowing through the AC-reactor 17 can be controlled discontinuously, whereby the current waveform containing higher harmonic components can be improved. Figure 4 shows a waveform of the current flowing through the AC-reactor 17 at this time point.

For practical application to a multi-room air conditioning system, the resonance capacitor 4 should desirably have a value within a range of 2 to 8 µF with the resonance reactor 7 being of 40 to 100 µH while the smoothing capacitor 6 is of 1000 to 3000 µF, in order to suppress actual changes of the load as well as generation of the higher harmonics to within a the practically permissible ranges.

When the load current increases, the current flowing through the AC-reactor 17 increases because of discharge of the smoothing capacitor 6. Accordingly, the PWM control of the switching element 3 is performed in dependence on the changes in the DC voltage to thereby effectuate such control that the voltage appearing across the smoothing capacitor 6 remains to be steadily constant. Owing to this feature, there can be realized control of the higher harmonic currents in dependence on the load of the air conditioning system.

As a modification of the configuration described above, there may be provided a carrier frequency control unit 16 for the switching element 3 to thereby carry out the control of the DC voltage in dependence on the carrier frequency of the PWM signal controlling the switching element 3. In this manner, the current flowing through the AC-reactor 17 can be controlled as well.

The three-phase active converter designed for controlling six transistors through the PWM control is very expensive with heavy burden being imposed on the implementation of the control portion. Besides, large overhead is involved in the arithmetic operation required for the control, making it difficult to implement the arithmetic unit in common to the PWM control circuit 11 and the inverter control module 12 in a simplified modular structure. Additionally, there is a problem that the DC voltage can not be controlled satisfactorily only with the duty control of the PWM control signal. It should also be mentioned that because the DC voltage Vdc changes when the inverter output current increases, there arises necessity for reading continuously the DC voltage for controlling the same.

Furthermore, in the active converter system, the smoothing capacitor is charged to a high voltage level for boosting the DC voltage Vdc, which is accompanied with a problem that a relatively lot of time is required for the voltage of the smoothing capacitor to lower down to a safety level after stoppage of the operation of the air conditioning system.

In the case of the power converter apparatus shown in Fig. 1, the DC voltage Vdc can be lowered by turning off the switch 15. However, a lot of time is taken for the DC voltage Vdc to lower to a safety level, which provides an obstacle to maintenance service. Accordingly, it is taught by the present invention to accelerate discharge of the smoothing capacitor 6 by driving instantaneously the inverter circuit 14A.

Next, referring to Fig. 3, description will be made of an air conditioning system according to a second embodiment of the present invention. Figure 3 is a block diagram showing a power converter according to another embodiment of the present invention. The power converter now under consideration is so implemented that the output information of the inverter circuit is received from the inverter control module 12 to thereby predict a current DC voltage Vdc by means of a DC voltage (Vdc) predicting circuit 13, wherein the PWM control of the switching element 3 is performed on the basis of this prediction information. In a multi-room air conditioning system equipped with a plurality of indoor heat exchangers, the prediction mentioned above can be made with sufficient accuracy on the basis of the characteristics of the system, making thus it unnecessary to provide the DC voltage detecting circuit 10 in the system shown in Fig. 1.

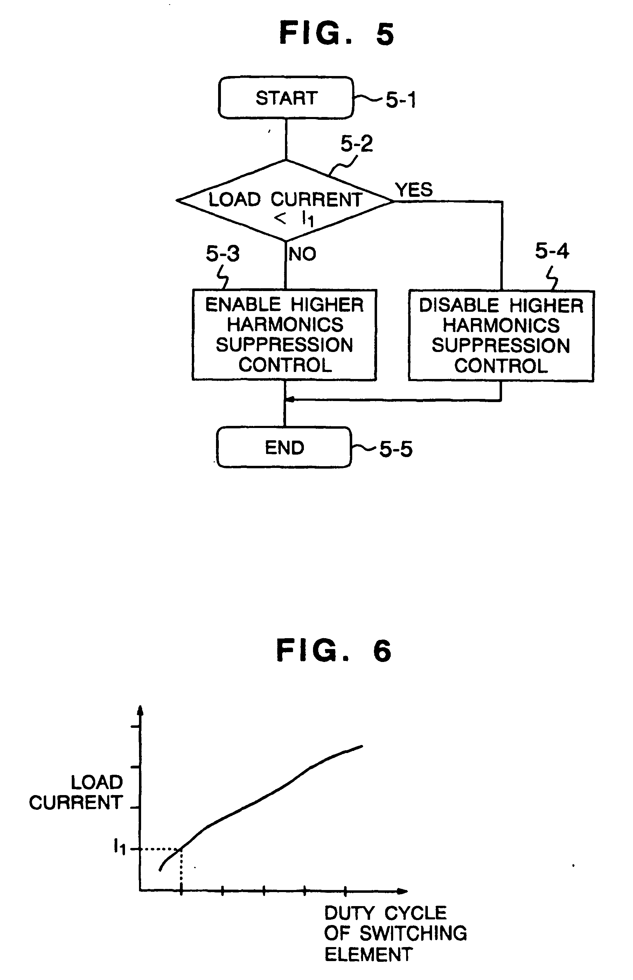

Next, a further embodiment of the present invention will be described by referring to the flow chart shown in Fig. 5. Relation between the duty ratio of the switching element and the load current for a given constant DC voltage is such as illustrated in Fig. 6. As can be seen from the curve shown in this figure, the duty ratio increases correspondingly as the load current increases. On the basis of the relation illustrated in Fig. 6, magnitude of the load current can be predicted. Referring to Fig. 5, when it is predicted in a step 5-2 that the load current is smaller than a predetermined value I₁, decision is made that the load is very small. In this case, the higher harmonic components as generated are negligible. Consequently, operation of the switching element 3 is stopped in a step 5-4 for reducing the loss ascribable to the operation of the switching element 3.

Again referring to Fig. 1, yet another embodiment of the present invention will be described. According to the instant embodiment, an external command signal reception/ input unit 19 is provided, as shown in Fig. 1, for making it possible to effectuate the suppression of higher harmonic current components in accordance with commands inputted by a maintenance engineer or user. In other words, by inputting an appropriate command signal to the external command signal reception/input unit 19, the higher harmonic suppression control can be stopped rather arbitrarily. The suppression of the higher harmonic current components may be spared as the case may be. When the higher harmonic current components are being suppressed, loss is brought about even in the converter circuit. Accordingly, it is desirable to adopt the measures for making it possible to suspend arbitrarily the higher harmonic suppression control when it is unnecessary.

In the air conditioning system described above, the PWM control to be performed by the PWM control circuit 11 shown in Fig. 1 may be realized by using in common an arithmetic operation unit incorporated in the inverter control module 12 for the PWM control and the inverter control, which can bring about the reduction of the whole cost of the air conditioning system.

As will now be understood from the foregoing description, in the air conditioning system according to the invention, the DC voltage inputted to the inverter circuit can be maintained constant steadily by virtue of such arrangement that the switching element undergoes the PWM control in dependence on the change in the voltage as brought about when the load increases. Owing to this feature, the cooling and heating capability of the air conditioning system can be enhanced because of capability of performing finer control for the operation of the air conditioning system. Additionally, generation of the higher harmonics can be suppressed with relatively simple arrangement. Thus, there can be realized an air conditioning system which is inexpensive as a whole.

Furthermore, according to the teachings of the invention, power loss in the air conditioning system can be reduced in addition to suppression of the higher harmonics. Besides, both the converter circuit and the inverter circuit can be controlled with a single arithmetic control unit, which also contributes to reduction of manufacturing cost of the air conditioning system.

In addition, because there are connected in parallel to the switching element, the resonance capacitor of 2 to 8 µF, the smoothing capacitor of 1000 to 3000 µH and the resonance capacitor of 40 to 100 µH, the switching element can be controlled stably through the pulse-width modulation control while coping with adequately the changes in the load which can actually take place in the case of a multi-room air conditioning system. In that case, generation of the higher harmonics due to steep change of the load can be suppressed to within a practically tolerable range.

## Claims

1. An air conditioning system including a refrigerating cycle system (20) having an indoor heat exchanger (21, 22), an outdoor heat exchanger (23), a four-way valve (24) and a compressor (25) which are connected with one another so as to form a closed loop, and a power converter (14) for converting AC power into DC power to inverter-control an electric motor built in the compressor (25), wherein the power converter (14) comprises:
a switching element (3) connected in parallel with a DC power source (2) for rectifying the AC power supplied from an AC power source (1);
a resonance capacitor (4) connected in parallel with the switching element (3);
a reverse current blocking diode (5) arranged between the switching element (3) and the resonance capacitor (4);
a smoothing capacitor (6) connected in parallel with the resonance capacitor (4);
a transistor inverter module (8) connected to an output of the smoothing capacitor (6);
a resonance reactor (7) arranged between the resonance capacitor (4) and the smoothing capacitor (6)
**characterized in that** the power converter (14) further comprises
DC voltage detection means (10) for detecting a DC voltage after passing of the resonance reactor (7), and
wherein the switching element (3) is pluse-width modulation (PWM) controlled in accordance with a change of the DC voltage detected by the DC voltage detection means (10) with a carrier frequency selected to be a value which is larger than a resonance frequency of the resonance capacitor (4) and the resonance reactor (7) but less than three times of the resonance frequency.

2. An air conditioning system according to claim 1 **characterized in that** a load current is predicted from an on-off ratio of the switching element (3), and a control operation of the switching element (3) is terminated when a value of the load current is smaller than a predetermined value.

3. An air conditioning system according to claim 1 or 2 **characterized in that** the resonance capacitor (4) has a capacitance value of 2 - 8 µ F, the smoothing capacitor (6) has a capacitance value of 1000-3000 F, and the resonance reactor (7) has an inductance value of 40-100 µ H.

4. An air conditioning system according to claim 1 or 3 **characterized in that** the control operation of the switching element (3) is allowed to be externally terminated.

5. A power conversion apparatus for converting an AC power to DC power to supply the DC power to a transistor module, the apparatus comprising:
a switching element (3) connected in parallel with a DC power source (2) having a rectifier diode module f or rectifying the AC power supplied from an AC power source (1) through an AC reactor (17) ;
a resonance capacitor (4) connected in parallel with the switching element (3);
a reverse current blocking diode (5) arranged between the switching element (3) and the resonance capacitor (4);
a smoothing capacitor (6) connected in parallel with the resonance capacitor (4);
a resonance reactor (7) arranged between the resonance capacitor (4) and the smoothing capacitor (6)
**characterized in that** the apparatus further comprises
DC voltage detection means (10) for detecting a DC voltage after passing of the resonance reactor (7), and
wherein the switching element (3) is pulse-width modulation (PWM) controlled in accordance with a change of the DC voltage detected by the DC voltage detection means (10) with a carrier frequency having a value which is larger than a resonance frequency of the resonance capacitor (4) and the resonance reactor (7) but less than three times of the resonance frequency.

## Patentansprüche

1. Klimaanlage mit einem Kühlkreislaufsystem (20), das einen Innenraumwärmetauscher (21, 22), einen Außenraumwärmetauscher (23), ein Vierwegeventil (24) und einen Kompressor (25), die so miteinander verbunden sind, dass sie eine geschlossene Schleife bilden, und einen Stromrichter (14) für das Umwandeln einer Wechselstromleistung in einer Gleichstromleistung, um einen Elektromotor, der in den Kompressor (25) eingebaut ist, mittels eines Wechselrichters zu steuern, aufweist, wobei der Stromrichter (14) folgendes umfasst:
ein Schaltelement (3), das parallel mit einer Gleichstromquelle (2) verbunden ist, um eine Wechselstromleistung, die von einer Wechselstromquelle (1) geliefert wird, gleichzurichten;
einen Resonanzkondensator (4), der parallel zum Schaltelement (3) verbunden ist;
eine einen Rückwärtsstrom blockierende Diode (5), die zwischen dem Schaltelement (3) und dem Resonanzkondensator (4) angeordnet ist;
einen Glättungskondensator (6), der parallel zum Resonanzkondensator (4) verbunden ist;
ein Transistorwechselrichtermodul (8), das mit einem Ausgang des Glättungskondensators (6) verbunden ist;
eine Resonanzdrossel (7), die zwischen dem Resonanzkondensator (4) und dem Glättungskondensator (6) angeordnet ist,
**dadurch gekennzeichnet, dass** der Stromrichter (14) weiter folgendes umfasst:
eine Gleichspannungsdetektionsvorrichtung (10) für die Detektion einer Gleichspannung, nachdem diese durch die Resonanzdrossel (7) hindurch gegangen ist, und
wobei das Schaltelement (3) mittels einer Pulsbreitenmodulation gemäß einer Änderung der Gleichspannung, die durch die Gleichspannungsdetektionsvorrichtung (10) detektiert wurde, mit einer Trägerfrequenz gesteuert wird, die so ausgewählt wird, dass sie einen Wert darstellt, der größer als eine Resonanzfrequenz des Resonanzkondensators (4) und der Resonanzdrossel (7) aber kleiner als das Dreifache der Resonanzfrequenz ist.

2. Klimaanlage nach Anspruch 1, **dadurch gekennzeichnet, dass** ein Laststrom aus dem An-Aus-Verhältnis des Schaltelements (3) vorhergesagt wird, und ein Steuerbetrieb des Schaltelements (3) beendet wird, wenn ein Wert des Laststroms kleiner als ein vorbestimmter Wert ist.

3. Klimaanlage nach Anspruch 1 oder 2, **dadurch gekennzeichnet, dass** der Resonanzkondensator (4) einen Kapazitätswert von 2 bis 8 µF aufweist, der Glättungskondensator (6) einen Kapazitätswert von 1000 bis 3000 µF aufweist, und die Resonanzdrossel (7) einen Induktivitätswert von 40 bis 100 µH besitzt.

4. Klimaanlage nach Anspruch 1 oder 3, **dadurch gekennzeichnet, dass** es ermöglicht wird, dass der Steuerbetrieb des Schaltelements (3) von außen beendet wird.

5. Stromrichterschaltungsanordnung für das Umwandeln einer Wechselstromleistung in einer Gleichstromleistung, um die Gleichstromleistung an ein Transistormodul zu liefern, wobei die Schaltungsanordnung folgendes umfasst:
ein Schaltelement (3), das parallel mit einer Gleichstromquelle (2) verbunden ist, das ein Gleichrichterdiodenmodul für das Gleichrichten der Wechselstromleistung, die von einer Wechselstromquelle (1) durch eine Wechselstromdrossel (17) geliefert wird, umfasst;
einen Resonanzkondensator (4), der parallel zum Schaltelement (3) verbunden ist;
eine einen Rückwärtsstrom blockierende Diode (5), die zwischen dem Schaltelement (3) und dem Resonanzkondensator (4) angeordnet ist;
einen Glättungskondensator (6), der parallel zum Resonanzkondensator (4) verbunden ist;
eine Resonanzdrossel (7), die zwischen dem Resonanzkondensator (4) und dem Glättungskondensator (6) angeordnet ist,
**dadurch gekennzeichnet, dass** die Schaltungsanordnung weiter folgendes umfasst:
eine Gleichspannungsdetektionsvorrichtung (10) für die Detektion einer Gleichspannung, nachdem diese durch die Resonanzdrossel (7) hindurch gegangen ist, und
wobei das Schaltelement (3) mittels einer Pulsbreitenmodulation gemäß einer Änderung der Gleichspannung, die durch die Gleichspannungsdetektionsvorrichtung (10) detektiert wurde, mit einer Trägerfrequenz gesteuert wird, die einen Wert aufweist, der größer als eine Resonanzfrequenz des Resonanzkondensators (4) und der Resonanzdrossel (7) aber kleiner als das Dreifache der Resonanzfrequenz ist.

## Revendications

1. Système de climatisation d'air comprenant un système à cycle frigorifique (20) possédant un échangeur de chaleur intérieur (21, 22), un échangeur de chaleur extérieur (23), une vanne à quatre voies (24) et un compresseur (25) qui sont raccordés les uns aux autres de façon à former une boucle fermée, et un convertisseur de puissance (14) pour convertir une puissance CA (courant alternatif) en une puissance CC (courant continu) afin d'inverser et de commander un moteur électrique incorporé dans le compresseur (25), dans lequel le convertisseur de puissance (14) comprend :
un élément de commutation (3) relié en parallèle à une source de puissance CC (2) pour redresser la puissance CA délivrée d'une source de puissance CA (1);
un condensateur de résonance (4) relié en parallèle à l'élément de commutation (3);
une diode de blocage de courant inverse (5) disposée entre l'élément de commutation (3) et le condensateur de résonance (4);
un condensateur de filtrage (6) relié en parallèle au condensateur de résonance (4);
un module d'inversion à transistor (8) relié à une sortie du condensateur de filtrage (6);
une bobine de résonance (7) disposée entre le condensateur de résonance (4) et le condensateur de filtrage (6),
**caractérisé en ce que** le convertisseur de puissance (14) comprend en outre
un moyen de détection de tension CC (10) pour détecter une tension CC après le passage de la bobine de résonance (7), et
dans lequel l'élément de commutation (3) est commandé par modulation d'impulsions en durée (PWM) conformément à une variation de la tension CC détectée par le moyen de détection de tension CC (10) avec une fréquence porteuse sélectionnée de façon à être une valeur qui est supérieure à une fréquence de résonance du condensateur de résonance (4) et de la bobine de résonance (7) mais inférieure à trois fois la fréquence de résonance.

2. Système de climatisation d'air selon la revendication 1, **caractérisé en ce qu'**un courant de charge est prédit à partir d'un rapport marche-arrêt de l'élément de commutation (3), et une opération de commande de l'élément de commutation (3) se termine lorsqu'une valeur du courant de charge est inférieure à une valeur prédéterminée.

3. Système de climatisation d'air selon la revendication 1 ou 2, **caractérisé en ce que** le condensateur de résonance (4) a une valeur de capacité comprise entre 2 et 8 µF, le condensateur de filtrage (6) a une valeur de capacité comprise entre 1000 et 3000 µF et la bobine de résonance (7) a une valeur d'inductance comprise entre 40 et 100 µH.

4. Système de climatisation d'air selon la revendication 1 ou 3, **caractérisé en ce que** l'opération de commande de l'élément de commutation (3) peut être terminée de manière externe.

5. Dispositif de conversion puissance pour convertir une puissance CA en une puissance CC de façon à délivrer la puissance CC à un module à transistor, le dispositif comprenant :
un élément de commutation (3) relié en parallèle à une source de puissance CC (2) possédant un module à diode de redressement f ou redressant la puissance CA délivrée d'une source de puissance CA (1) par l'intermédiaire d'une bobine de réactance CA (17);
un condensateur de résonance (4) relié en parallèle à l'élément de commutation (3);
une diode de blocage de courant inverse (5) disposée entre l'élément de commutation (3) et le condensateur de résonance (4);
un condensateur de filtrage (6) reliant parallèle au condensateur de résonance (4);
une bobine de résonance (7) disposée entre le condensateur de résonance (4) et le condensateur de filtrage (6),
**caractérisé en ce que** le dispositif comprend en outre
un moyen de détection de tension CC (10) pour détecter une tension CC après le passage de la bobine de résonance (7), et
dans lequel l'élément de commutation (3) est commandé par modulation d'impulsions en durée (PWM) conformément à une variation de la tension CC détectée par le moyen de détection de tension CC (10) avec une fréquence porteuse qui a une valeur supérieure à une fréquence de résonance du condensateur de résonance (4) et de la bobine de résonance (7) mais inférieure à trois fois la fréquence de résonance.
